# EUROPEAN PATENT SPECIFICATION

(11) **EP 3 665 020 B1**
(45) Date of publication and mention of the grant of the patent: **04.10.2023**
(21) Application number: 18765183.1
(22) Date of filing: 07.08.2018
(51) Int. Cl.: B60C 11/03, B60C 11/12

(54) **TYRE FOR VEHICLE WHEELS**
REIFEN FÜR FAHRZEUGRÄDER
PNEU POUR ROUES DE VÉHICULE

(30) Priority: 07.08.2017 IT 201700091374; 07.08.2017 IT 201700091382
(43) Date of publication of application: 17.06.2020
(73) Proprietor: Pirelli Tyre S.p.A., 20126 Milano (IT)
(72) Inventor: BELLO, Vito, 20900 Monza (MB) (IT); MONTESELLO, Stefano, 20126 Milano (IT); SPEZIARI, Diego, 20126 Milano (IT)
(74) Representative: Susanetto, Carlo
(86) International application number: PCT/IB2018/055933
(87) International publication number: WO 2019/030664

(56) References cited:
- EP-A1- 0 609 194
- WO-A1-2012/076456
- WO-A1-2016/189418
- WO-A1-2017/082406
- CN-A- 103 786 529
- DE-U1- 29 825 135
- US-A1- 2011 108 175
- US-A1- 2017 190 222

## Description

The present invention relates to a tyre for vehicle wheels, more particularly a winter tyre.

A tyre generally comprises a carcass structure of a substantially toroidal shape around a rotational axis and includes at least one carcass ply provided with end flaps engaged with respective annular reinforcing structures, known as beads.

In a position radially external to the carcass structure a belt structure is provided, comprising, in the case of car tyres, at least two radially overlapping strips of rubberized fabric provided with reinforcing cords, usually metallic, arranged in each strip parallel to each other but crossed respective to the cords of the adjacent strip, preferably symmetrically relative to the equatorial plane of the tyre.

Preferably, the belt structure further comprises, in a radially external position, at least on the ends of the underlying belt strips, also a third layer of textile or metal cords, arranged circumferentially (at 0 degrees). A radially inner layer is further present in tubeless tyres, called a "liner," which has waterproof characteristics to ensure the air-tightness of the tyre itself.

In a position radially external to the belt structure a tread band is applied, made of elastomeric material, on which a tread surface is defined that is designed to get in contact with the road surface.

In order to ensure adequate road grip even on a wet road surface, the tyres have a tread band provided with grooves of various shapes and geometry that delimits portions of the tread band, named blocks, intended to contact the ground.

The overall configuration of the tread band defined by the set of grooves and blocks forms the tread pattern.

The tread pattern may be not symmetrical relative to the equatorial plane of the tyre and may provide a differentiated configuration between the external region of the tyre, intended to be facing outward when the tyre is mounted on the vehicle, and the opposite inner region of the tyre. A tyre having a tread pattern of this type is called "asymmetrical."

The main function of the grooves is to allow for the evacuation of the water present between the surface of the tyre and the road surface at the moment of reciprocal contact, preventing the hydrostatic pressure resulting from the impact of the water against the advancing tyre, or partial lifting of the tyre from the road surface and from causing subsequent loss of control of the vehicle.

Moreover, in the case of winter tyres, small notches, called "sipes," are generally provided on the blocks of the tread band, extending from the tread surface of the tyre to the inside of the block. The function of the sipes is to offer additional gripping elements when driving on snowy surfaces and to retain a certain amount of snow, thus improving the grip on the road surface.

WO 2016/189418, WO 2012/076456, DE 29825135U1, US 2011/108175, EP 609194, WO 2017/082406, US 2017/190222 and CN 103786529 describe examples of winter tyres according to the prior art.

The Applicant has observed that the grooves and the sipes affect the directionality and stability characteristics of the tyre relative to the tangential stresses directed perpendicularly to the direction in which the grooves and the sipes are extended.

In particular, the Applicant verified that the grooves and the sipes provided in a circumferential direction influence the characteristics of directionality and stability of the running of the tyre in relation to the tangential stresses with a component parallel to the rotation axis of the tyre, for example, during the cornering of the vehicle, while the grooves and the sipes provided in the axial direction, in turn, affect the traction characteristics of the tyre relative to the tangential stresses with a component parallel to the direction of travel, for example during the acceleration and braking phases of the vehicle.

The Applicant has observed moreover that, in general, the "asymmetrical" tyres are not "directional," i.e. they do not provide for rotation in a preferential direction of travel, whereby if the tyre is mounted on a right wheel of the vehicle it is designed to rotate in one direction of rotation, while if the tyre is mounted on a left wheel of the vehicle it is designed to rotate in the opposite direction of rotation.

The Applicant verified that in an "asymmetrical" tyre the behaviour on the road can vary significantly when it is rotated in two different rotational directions.

The Applicant also noted that this distinction is particularly significant in the central region of the tread band, where generally the main transverse grooves are strongly slanted relative to the axial direction of the tyre.

He thus felt the need to produce a tyre wherein the grooves and the sipes are configured in such a way as to define a tread pattern able to offer a particularly balanced behaviour on the road, both in cornering and in the braking and acceleration phases, which behaviour being, at the same time, sufficiently similar when rotating in anyone of the two rotational directions.

Firstly, the Applicant has perceived that an asymmetrical tread pattern in which the main transverse grooves, at least in correspondence with a central region of the tread band, are slanted in a mutually consistent manner relative to a circumferential direction of the tyre, maintain the same trend both when it is mounted on one vehicle wheel as when mounted on the other vehicle wheel.

In other words, this configuration forms an invariant characteristic relative to the rotational direction of the tyre.

Moreover, such a configuration of the main transverse grooves allows to achieve a high capacity for water evacuation in case of driving on wet surfaces. In fact, the water present in the central region of the tread band is guided towards the outer edges of the tread band through the main transverse grooves without sudden changes in direction, which would hinder the outflow.

The Applicant has understood, however, that a succession of main transverse grooves all slanted in the same direction may result in poorly balanced behaviour of the tyre during traction and curve conduction. For example, the slanted grooves may cause an axial stress component on the tyre, which, in turn, involves a traction unbalancing of the tyre with consequent lateral drift of the same, even when driving in a straight direction.

To avoid this potential inconvenience, the applicant has therefore noted that the behaviour of the main transverse grooves can be adequately compensated for by suitably configuring the grooves with a narrow section present on the tread band, in particular the sipes and any secondary transverse grooves.

Finally, the Applicant has found that the behaviour of the tyre on the road, particularly of a winter tyre, is particularly balanced by adopting a tread pattern wherein, at least in the central region, all the main transverse grooves are slanted in a concordant manner to one another, and all the sipes provided in such a central region are slanted in the opposite direction to the main transverse grooves.

In particular, in a first aspect thereof, the invention relates to a tyre for vehicle wheels according to claim 1.

Thanks to these embodiments, the tyre according to the invention comprises a tread pattern which has an overall configuration substantially invariant relative to the rolling direction of the tyre, making it particularly suitable for use in an "asymmetrical" tyre, and at the same time has a configuration where the gripping edges defined by the main transverse grooves and the sipes have uniformly distributed slants so that the behaviour of the tyre is particularly balanced both in traction (in acceleration or braking) and in bend driving.

Moreover, the concordant trend of the main transverse grooves improves the speed of water evacuation, when driving on wet roads.

The term "equatorial plane" of the tyre means a plane perpendicular to the rotational axis of the tyre and which divides the tyre into two equal parts. "Circumferential" direction means a direction generally oriented according to the rotational direction of the tyre, or, at most, slightly slanted (at most by about 5°) relative to the rotational direction of the tyre.

"Axial" direction means a direction substantially parallel to the rotational axis of the tyre, or, at most, slightly slanted (at most by about 5°) relative to said rotational axis of the tyre. The axial direction is generally perpendicular to the circumferential direction.

The term "effective width" referring to the tread band is defined as the width of the radially outermost portion of the tread band (edge to edge) designed to get in contact with the ground.

A "central region" of the tread band is a portion of the tread band extending circumferentially around an equatorial plane of said tyre for a width equal to at least 30% of the effective width of the tread band, preferably for a width between 40% and 75% of the effective width.

The central region can be extended symmetrically relative to the equatorial plane. In particular, when on the tread band there are provided circumferential or almost circumferential grooves, the central region may be delimited on one or both sides, by one of said circumferential grooves.

"Shoulder regions" of the tread band, mean the portions of the tread band extending circumferentially to the opposite sides of the central region, in an axially external position of the tread band.

Preferably, each shoulder region is extended by a width of at least 10% of the effective width of the tread band.

A shoulder region is called "internal" when it is meant to be facing the vehicle when the tyre is mounted on the vehicle and is likewise called "external" when it is meant to be facing the outside of the vehicle when the tyre is mounted on the vehicle.

A tyre is called "asymmetrical" when its tread pattern is not symmetrical relative to the equatorial plane. In an asymmetric tyre an inner region of the tread band is defined, formed by the half of the tread band delimited by the equatorial plane and designed to be facing towards the vehicle when the tyre is mounted on the vehicle, and an outer region of the tread band formed by the half of the tread band axially opposed to the equatorial plane.

The term "groove" means a recess formed in a portion of the tread band, having a width greater than or equal to 1.5 mm, and preferably with a depth greater than 3 mm.

A groove is called "circumferential" when it extends along a circumferential direction or, at most, is slanted at an angle less than 5° respective to the circumferential direction.

A groove is called "transverse" when it extends along a slanted direction respective to the circumferential direction of an acute angle greater than at least 10°.

A groove is called "main" when it has a width greater than 3 mm, preferably greater than 5 mm, while it is called "secondary" when it has a width of less than or equal to 3 mm.

The term "sipe" means a recess formed in a portion of the tread band, having a width of less than 1.5 mm, preferably less than or equal to 1 mm.

The width of sipes and grooves should be measured at a depth greater than or equal to 1 mm, preferably greater than or equal to 1.5 mm.

In the case in which the width of the groove or the sipe varies along its longitudinal line, the average width is considered, the value of which is obtained as the average of the different width values suitably evaluated according to the relative longitudinal extent. For example, if a groove has a width of 5 mm for 80% of its longitudinal extent and a width of 3 mm for the remaining 20%, the average value of the width to be considered will be equal to 5 x 0.8 + 3 x 0.2 = 4.6 mm.

Similarly, if the width of a groove, in particular of a transverse groove, varies along the tread band depending on the length of the tread to which it belongs, the average value is considered.

A groove is defined as being "through" when it opens onto two or more distinct grooves, connecting them. In the case of branched grooves, a through groove has at least two open ends along distinct grooves.

One end of a groove is called "blind" when it does not open onto another groove.

The slant of a transverse groove relative to a circumferential direction identified on the tread band is defined by the acute angle formed by the groove with the circumferential direction. As a special case, a transverse groove extending parallel to the axis of the tyre will have a slant of 90° relative to the circumferential direction.

Two (or more) transverse grooves are slanted "in a concordant manner" when their trend is, for both, increasing or decreasing when they are considered on a Cartesian plane positioned on the tread band (tangentially to the same) with the axis of the ordinates parallel to the circumferential direction and the axis of the abscissas parallel to the axis of the tyre.

Consequently, two transverse grooves are slanted "in a discordant manner" when their trend is, when considered in such a Cartesian plane, increasing for one groove and decreasing for the other groove.

Two portions of groove (or two grooves) are "substantially aligned" when their longitudinal axes, at least at their respective mutually facing ends, are offset by a value that is less than their width (in the case of portions of different widths, the greatest width is considered). Conversely, two groove portions (or two grooves) are referred to as "misaligned." The misalignment value between two groove portions (or two grooves) is measured as the distance between the relative longitudinal axes.

Two grooves are "adjacent" when they are arranged on the tread surface one after the other, considering the rotation of the tyre in any of the two directions of rotation. In particular, two grooves of the same type are adjacent when no other grooves of that type are provided between them.

By "tread pattern" is meant the overall configuration of the tread band as defined by the set of grooves and blocks that are delimited by them.

A "module" of the tread pattern is defined by the minimum portion of the tread band whose configuration is repeated in succession along the circumferential extent of the tread band to form said tread pattern.

A module is extended between the axial ends of the tread band. Moreover, while maintaining an identical basic configuration, the modules may have a circumferential dimension (known as "pitch") slightly different from one another, for example, on a tread band modules can be used with two, three or four different pitches, variously combined with each other.

A first group of a predefined type of grooves is called "complementary" to a second group of grooves of the same type when the sum of the grooves from the first and second group embodies the totality of the grooves of that type.

This invention, in the above aspect, can have at least one of the other preferred features indicated hereafter.

Preferably, all said main transverse grooves provided on at least one of said shoulder regions are slanted relative to a circumferential direction in a manner consistent with said main transverse grooves provided on said central region.

In this way, the concordant pattern of the main transverse grooves is extended over the entire axial extension of the tread band, obtaining a better uniformity of road behaviour from the tyre both when rotated in one direction of rotation and when rotated in the opposite direction. In addition, this embodiment also improves behaviour on wet surfaces, favouring the rapid outflow of water towards the outside of the tread band.

Preferably, sipes are provided on all the blocks of said shoulder regions and of said central region.

Preferably, in said central region, said sipes are all parallel to one another. Preferably, in said central region, said sipes are slanted relative to said circumferential direction by an angle comprised between 65° and 85°, more preferably between 70° and 80°.

This configuration allows the sipes to make a constant and significant contribution to the tyre's directionality, effectively compensating for the effect of the homogeneous slant of the main transverse grooves.

According to an aspect of the invention, a plurality of first main transverse grooves is provided in one of said shoulder regions and in said central region, each of said first main transverse grooves comprises a first portion extending from said shoulder region towards an equatorial plane of said tyre, which is slanted relative to said circumferential direction by a first angle, and a second portion extending into said central region towards said equatorial plane as a continuation of said first portion, which second portion is slanted relative to said circumferential direction by a second angle, smaller than said first angle.

Preferably, said first angle is between 70° and 90°.

Preferably, said second angle is between 35° and 50°.

This configuration defines a main transverse groove which, on the one hand, allows a more gradual entry of the main transverse groove into the footprint area, positively influencing the tyre noise aspects, and on the other hand, maintains a sufficiently axial orientation to guarantee excellent performance during acceleration and braking of the tyre.

Actually, thanks to these features, the Applicant has verified that the tyre according to the invention has significantly reduced noise levels and, in addition, improved behaviour on the road, particularly in the traction phase.

In fact, the specific selection of the slant intervals of the different portions of the first transverse groove allows for production of a tread pattern with a circumferentially more limited module, in which only one block can be provided in the shoulder region. This enables the elimination of one of the noise sources highlighted by the analysis of the characteristic frequencies of the tread band and, as a further important advantage, to obtain a tread pattern in which the transverse grooves are more compact and frequent, so that, in the footprint area, the gripping edges in contact with the ground are more numerous and more effective in the traction phase, providing at least two first transverse grooves in the footprint area. On the other hand, the Applicant has verified that the provision of first transverse grooves with a second extended portion in the central region slanted relative to the circumferential direction greater than 50° would have led to a substantial new increase in the noise level.

Therefore, the selection of the specific angulation interval of the first transverse grooves allows for optimization of the tread pattern according to the noise reduction requirements, achieving, in addition, an improvement in the road performance of the tyre.

Moreover, this configuration allows for an embodiment of a tread pattern with a large number of main transverse grooves in the tyre footprint area, preferably at least two first main transverse grooves.

In a particularly preferred embodiment of the invention, said second angle is between 35° and 45°.

In this narrow range of angles, tyre performance in terms of noise reduction and improved road performance are further optimized.

Preferably, said first main transverse grooves comprise a first end, axially external, open to a lateral edge of said tread band.

Preferably, said first main transverse grooves comprise a second, axially internal, blind end.

This feature avoids the formation, at the second end of the first main transverse groove, of blocks with particularly reduced width, which may not be very rigid, and therefore not suitable for opposing the tangential stresses exerted on the tread band by the vehicle drive, and/or easily worn out.

Preferably, said second portion of said first main transverse grooves has a decreasing width starting from said first portion up to an axially internal end of said first main transverse grooves.

Preferably, said first portion of said first main transverse grooves has a decreasing width starting from an axially external end of said first main transverse grooves up to said second portion.

In this way a channel is formed whose width increases starting from the region closest to the equatorial plane towards the lateral edge of the tread band, so as to facilitate the evacuation of the water from the inside towards the outside of the tread band.

Preferably, said shoulder region is separated from said central region by a circumferential groove intersecting said first main transverse grooves.

In this way, the water coming from the central region through the first main transverse grooves can be easily evacuated along the circumferential direction. Furthermore, the shoulder region is clearly delimited.

Preferably, a plurality of secondary transverse grooves is formed in said central region.

Preferably, said secondary transverse grooves are slanted in a concordant manner to one another and in a discordant manner with respect to said main transverse grooves.

In this way, the sipe balancing action can be strengthened in specific regions of the tread band.

Preferably, said secondary transverse grooves intersect said first main transverse grooves.

Thanks to this feature, the sipe balancing action is strengthened in correspondence with the first main transverse grooves, so as to locally compensate their effect of traction unbalancing.

Preferably, each of said secondary transverse grooves comprises a first portion extending towards one of said shoulder regions, which is slanted respective to said circumferential direction by a third angle.

Preferably, each of said secondary transverse grooves comprises a second portion extending from said first portion towards said shoulder region, which is slanted respective to said circumferential direction by a fourth angle.

Preferably, said fourth angle is smaller than said third angle.

Preferably, said third angle is between 65° and 85°, more preferably between 70° and 80°.

Preferably, said fourth angle is between 20° and 50°, more preferably between 20° and 40°.

In this manner, at the second portion of the first main transverse grooves, which has an orientation closer to the circumferential direction and that thus, in the traction phase, tends to cause a more pronounced shifting effect from the circumferential direction, secondary grooves are provided, having a similar slant but with an opposite imprint relative to said second portion, in order to counterbalance the lateral drift effect.

Preferably, said equatorial plane divides said tread band into an inner region, designed to be facing towards the vehicle when said tyre is mounted on said pneumatic vehicle, and in an outer region, different from the inner region and designed to face the side opposite the vehicle when said tyre is mounted on said vehicle, so defining an asymmetrical tyre, said first main transverse grooves extending within said inner region of said tread band.

In this manner, the first main transverse grooves can be configured to fulfil some specific needs of the inner region of the tread band and, in particular, those related to drive on snowy ground.

Preferably, said secondary transverse grooves are extended into said inner region of said tread band.

In this manner, the effect of the first main transverse grooves and secondary grooves is limited to the inner region of the tread band, characterizing its functionality relative to the other regions of the tread band. In particular, the inner region of the tread band is particularly configured to provide the tyre with excellent performances on snowy ground.

Preferably, said first portion of said secondary transverse grooves is substantially parallel to said sipes provided in said central region.

Thanks to this feature, the first portion of the secondary transverse groove behaves uniformly to the sipes, reinforcing the balancing effect.

Preferably, said third angle and said first angle differ in absolute value by less than 15°, more preferably less than or equal to 10°.

Preferably, said fourth angle and said second angle differ in absolute value by less than 15°, more preferably less than or equal to 10°.

In this manner, the first main transverse grooves and the secondary transverse grooves have substantially similar slants but with an opposite sign, being substantially symmetrical with respect to an identifiable symmetry line on the tread band. Thanks to this, the effects of their respective slant are further and effectively counterbalanced.

Preferably, said first portion of said secondary transverse grooves intersects one of said first main transverse grooves at a second portion thereof.

Preferably, said first portion of said secondary transverse grooves opens onto a circumferential groove provided on said tread band.

In this manner, the first portion of the secondary transverse groove can connect the first main transverse groove with a circumferential groove, increasing the capacity for rapid evacuation of the water present in the central region of the tread band.

Preferably, said second portion of said secondary transverse grooves extends between said first portion of said secondary transverse grooves and said second portion of one of said first main transverse grooves.

Preferably, said second portion terminates in a first main transverse groove adjacent to the first main transverse groove intersected by the first portion of the secondary transverse groove.

Preferably, each of said secondary transverse grooves comprises a third portion, extending from said second portion of said first main transverse groove, on the opposite side of said second portion of secondary transverse groove.

In this manner, the secondary transverse groove also effectively balances the second section of the portion of the first main transverse groove axially internal relative to its intersection with the second portion of the secondary transverse groove.

Preferably, said third portion of the secondary transverse grooves is substantially parallel to said second portion of the secondary transverse grooves.

In this manner, the slant of the second and third portions of the secondary transverse groove is kept constant so as to adequately balance the constant slant of the second portion of the first main transverse groove.

Preferably, said third portion of the secondary transverse grooves is extended between said second portion of a first main transverse groove and a connecting portion between said first portion and said second portion of a first adjacent main transverse groove.

In this manner, between the two first adjacent main transverse grooves there may be delimited blocks of suitable size and configuration, preferably with four or five sides.

Moreover, with this configuration, each secondary transverse groove intersects a first main transverse groove with a first portion thereof, then intersects another first adjacent main transverse groove with its second and third portion, and finally terminates with its third portion in a further first adjacent main transverse groove.

Preferably, in said tread band a first group of secondary transverse grooves is identified, wherein, in each secondary transverse groove, said third portion is substantially aligned with said second portion.

Preferably, said first group comprises at most 20%, more preferably between 5% and 10%, of all said secondary transverse grooves provided on said tread band. Preferably, in said tread band a second group of second secondary transverse grooves is also identified, wherein, in each secondary transverse groove, said third portion is misaligned with respect to said second portion.

Preferably, said second group is complementary to said first group and comprises at most 95% of all said secondary transverse grooves provided on said tread band. In this manner, some secondary transverse grooves, those belonging to the first group identified above, have the respective second and third aligned portions while all the others belonging to the second group have their respective second and third portions misaligned with each other.

The advantageous effect obtained by this configuration is that of reducing the overall noise of the tread band, since the succession of impacts of the secondary transverse grooves defines an enlarged frequency spectrum distributed over many values.

Preferably, in each secondary transverse groove of said second group, said third portion and said second portion are misaligned by a distance of less than 25 mm, more preferably less than 15 mm and even more preferably less than 10 mm.

In this manner, the misalignment between the two groove portions is contained within reduced dimensions, so that the balancing effect is maintained even locally with the first main transverse groove.

Preferably, in said second group secondary transverse grooves are identified having different misalignment values between said third portion and said second portion. Even more preferably, in said second group, the misalignment values between said third portion and said second portion of secondary transverse grooves are at least three.

In this manner, it is achieved that the noise caused by the impact of the second and third portions of the secondary transverse grooves with the road surface is distributed over a broader frequency spectrum, so as to decrease the overall intensity.

Preferably, each of the third portions of the said secondary transverse grooves comprises a first end, from which said third portion is extended starting from said second portion of said first main transverse groove, and wherein said first ends of the third portions of the said secondary transverse grooves are substantially aligned along said circumferential direction.

Preferably, each of the said secondary transverse grooves comprises a first, axially internal, end from which said first portion of said secondary transverse groove is extended towards said shoulder region and identifies a first corresponding main transverse groove in which said second portion of said secondary transverse groove ends, wherein said first end of each of said secondary transverse grooves and a first axially outer end of said first corresponding transverse groove are substantially aligned along an axial direction of said tyre, or, at most, they are offset by less than 20 mm, more preferably less than 10 mm.

In this manner, the secondary transverse groove is substantially symmetrical to a first main transverse groove corresponding to a circumferential direction.

Preferably, each of said first main transverse grooves comprises a third portion extending from said second portion towards said equatorial plane, which is slanted relative to said circumferential direction by a fifth angle smaller than said second angle.

Preferably, said fifth angle is between 10° and 25°.

In this manner, the first main transverse grooves can be kept inside the inner region of the tread band even in treads with reduced width.

Preferably, said first portion of said secondary transverse grooves intersects said first main transverse grooves in said third portion.

Preferably, on said tread band a tread pattern is defined, formed by the configuration of grooves and blocks provided on said tread band.

Preferably, on said tread band a module of said tread pattern is also defined, formed by the minimum portion of tread band whose configuration is repeated successively along the circumferential development of the tread band to form said tread pattern.

Preferably, said module, in said shoulder regions, comprises a single block extended along said circumferential direction.

This feature allows the production of a tread pattern that, while maintaining high performance in terms of behaviour on the road, also has excellent characteristics in terms of noise. The Applicant has indeed verified that the presence in the module of the tread pattern of two adjacent shoulder blocks along the circumferential development of the tread band proves to be a relevant source of noise.

Preferably, on said central region three circumferential grooves are provided which delimit a pair of circumferential ribs, on each of which are provided second main transverse grooves.

In this manner, a region especially configured for driving on wet roads is defined on the central region of the tread band. In this region, in fact, the water present in the central region of the tread band can be rapidly evacuated by means of the circumferential grooves.

Preferably, this region is adjacent to the tread band region on which the first main transverse grooves and secondary transverse grooves are provided.

Preferably, said second main transverse grooves provided on one of said circumferential ribs are substantially aligned with corresponding second main transverse grooves provided on the other of said circumferential ribs. Preferably, said second main transverse grooves are slanted relative to said circumferential direction by a sixth angle between 60° and 80°.

Preferably, on a shoulder region axially opposed to said first main transverse grooves, a plurality of third main transverse grooves are provided, which are slanted relative to said circumferential direction by a seventh angle between 70° and 90°.

Preferably, said third main transverse grooves are substantially parallel to said first portion of said first main transverse grooves.

Preferably, on said shoulder region axially opposed to said first main transverse grooves, said sipes are substantially parallel to said third main transverse grooves. Preferably, on said shoulder region from which said first main transverse grooves are extended, said sipes are substantially parallel to said first portion of said first main transverse grooves.

Preferably, in a radially internal position relative to the tread band, a belt structure is provided comprising at least a first radially internal strip, provided with first reinforcing cords parallel to each other and slanted relative to the equatorial plane. Preferably, said belt structure comprises a second radially external strip, superimposed on the first strip, provided with second reinforcing cords parallel to each other and slanted symmetrically relative to the first cords relative to the equatorial plane.

Preferably, said main transverse grooves are slanted in a concordant manner with said first reinforcing cords.

Preferably, said sipes and/or said secondary transverse grooves are slanted in a concordant manner with said second reinforcing cords.

This configuration makes it possible to balance any traction imbalance caused by the structure of the belt layers underlying the tread band.

The characteristics and advantages of the invention will become clearer from the detailed description of some of its preferred embodiments, illustrated using a nonlimiting example with reference to the accompanying drawings, wherein:
- figure 1 is a front view of a first embodiment of a tyre for vehicle wheels made in accordance with the present invention;
- figure 2 is a schematic enlarged scale view of a significant portion of the tread band of the tyre of figure 1,
- figure 3 is a schematic enlarged scale view of a significant portion of the tread band of a second exemplary tyre made in accordance with the present invention,
- figures 4 and 5 are respective representations of the footprint area of the tyre of figure 1 and of a tyre according to the prior art.

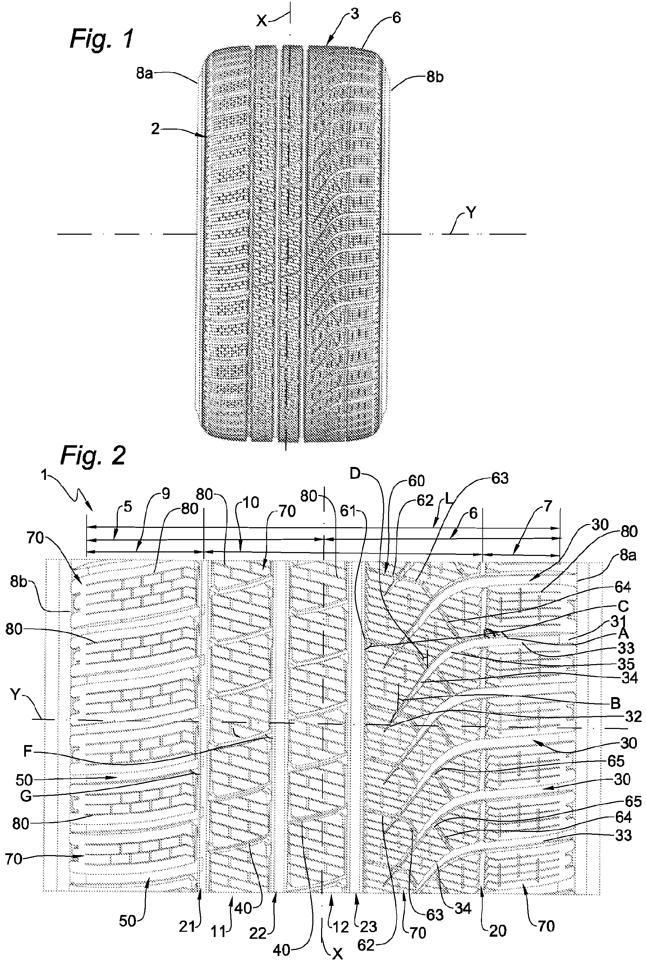

With an initial reference to figures 1 and 2, the reference number 1 overall indicates a tyre for vehicle wheels made in accordance with the present invention. The tyre 1 comprises a conventional tyre structure, not shown in the attached figures, and a tread band 2 on which a tread surface 3 is defined, arranged radially outside the tread band 2 and intended for contact with a road surface.

The tyre 1 embodies a conventional generically toroidal shape extended around a rotational axis, defining on the tread surface 3 an axial direction Y parallel thereto, and traversed by an equatorial plane X, perpendicular to the axis of rotation and defining on the tread surface 3 a circumferential direction parallel thereto.

The tyre 1 is preferably designed to be mounted on a high-performance car and has a nominal section width of approximately 295 mm with a 20-inch diameter.

On the tread band 2 an effective width L is identified, defined as the maximum width of the tread band designed for contact with the ground under standard conditions of use.

The tyre 1 is an asymmetrical tyre, so that the equatorial plane X divides the tread band 2 into an outer region 5 of the tread band, designed to face the outside of the vehicle when the tyre is mounted on the vehicle, and into an inner region 6 of the tread band, axially opposite the outer region 5.

On the tread band 2 there is also defined an internal shoulder region 7, extending between a first lateral edge 8a of the tread band 2 and a first circumferential groove 20, as well as an external shoulder region 9, axially opposite the internal shoulder region 7 and extended between a second lateral edge 8b and a second circumferential groove 21.

Between the internal shoulder regions 7 and the external shoulder region 9 a central region 10 is defined, extending between the first circumferential groove 20 and the second circumferential groove 21.

The internal shoulder region 7 is axially extended by a width smaller than the external shoulder region 9, so that the central region 10 is not symmetrical relative to the equatorial plane X. In particular, the internal shoulder region 7 is axially extended by a width equal to about 17% of the effective width L, the external shoulder region 9 is axially extended by a width equal to about 25% of the effective width L, and the central region 10 is axially extended by a width equal to about 58% of the effective width L.

In the central region 10 of the tread band 2 a third and a fourth circumferential groove are also provided, indicated with 22 and 23 respectively, which define a pair of circumferential ribs 11 and 12, substantially of equal width.

The first circumferential groove 20 has a constant width of about 3.5 mm and a depth of about 6.5 mm, the second circumferential groove 21 has a constant width of about 10 mm and a depth of about 8 mm, while the third and fourth circumferential grooves 22 and 23 have a constant width of about 12.5 mm and a depth of about 8.5 mm.

In this embodiment, all the circumferential grooves are therefore main grooves.

On the internal and external shoulder regions 7, 9 and on the central region 10 of the tread band 2, respective pluralities of main transverse grooves are also provided, in particular a plurality of first main transverse grooves 30, extending between the internal shoulder region 7 and central region 10, a plurality of second main transverse grooves 40, extending in the circumferential ribs 11 and 12 of the central region 10 and a plurality of third main transverse grooves 50 extending in the external shoulder region 9.

All the main transverse grooves 30, 40 and 50 are slanted relative to the circumferential direction in a concordant manner with one another, as is clearly visible in figure 2, where they are all slanted in an increasing manner starting from the second lateral edge 8b (in figure 2 represented by the left side of the tread band 2) up to the first lateral edge 8a (in figure 2 represented by the right side of the tread band 2).

The first main transverse grooves 30 extend from a first, axially external, end 31, open to a first lateral edge 8a of the tread band 2 up to a second, axially internal, blind end 32, facing the equatorial plane X, crossing the internal shoulder region 7 and ending in the central region 10 near the fourth circumferential groove 23, without however opening into the same.

Each first main transverse groove 30 comprises a first portion 33, extending from the first end 31 through the internal shoulder region 7, and a second portion 34, extending into the central region 10 and connected continuously to the first portion 33.

The first portion 33, substantially straight, is slanted relative to a circumferential direction by a first angle A of about 85°, while the second portion 34, also substantially straight, is slanted relative to said circumferential direction by a second angle B of about 37° and joined to the first portion 33 by means of a curved connecting portion 35.

The first main transverse grooves 30 have a depth of about 7.5 mm, with a variable width along their extension.

In particular, the first portion 33 of each first main transverse groove 30 has a width, which is constant in any single first main transverse groove, comprised between a minimum value of about 6 mm and a maximum value of about 11 mm, according to the pitch of the specific module to which said first main transverse groove belongs, while the second portion 34 has a decreasing width starting from the first portion 33 up to the second end 32, with an average value of about 3.5 - 4.5 mm.

In a central region 10 of the tread band 2, in particular in the inner region 6 of the same, moreover, a plurality of secondary transverse grooves 60 is provided, intersecting the first main transverse grooves 30.

Each secondary transverse groove 60 comprises a first portion 62, extending from a first, axially internal, end 61, which opens onto the fourth circumferential groove 23, towards the internal shoulder region 7 and a second portion 63, extending as a continuation of the first portion 62 until it ends in the second portion 34 of a first main transverse groove 30.

The first main transverse groove 30 wherein the second portion 63 of a secondary transverse groove 60 ends, is defined as the corresponding first main transverse groove of the secondary transverse groove 60.

Each secondary transverse groove 60 comprises moreover a third portion 64, extending from the second portion 34 of the corresponding first main transverse groove, opposite to the second portion 63.

Each secondary transverse groove 60 is slanted relative to the circumferential direction in a discordant manner respective to the main transverse grooves, as is clearly visible in figure 2 where they are all slanted in decreasing manner starting from the fourth circumferential groove 23 and continuing towards the internal shoulder region 7.

All portions of the secondary transverse groove have a substantially constant width of about 2.5 mm and a depth of about 7 mm.

The first portion 62 of each secondary transverse groove 60, substantially straight, is slanted relative to the circumferential direction by a third angle C of about 75°, while the second portion 63, also substantially straight is slanted relative to the circumferential direction by a fourth angle D of about 30°.

The third angle C and the first angle A, despite having the opposite sign, differ in absolute value by about 10°, as do the second angle B and the fourth angle D.

The first portion 62 of each secondary transverse groove 60 intersects the second portion 34 of a first main transverse groove 30 adjacent to the corresponding first main transverse groove.

In each secondary transverse groove 60, the third portion 64 is substantially parallel to the second portion 63 and extends starting from an end 65, opening into the second portion of the corresponding first main transverse groove 30, to open into a connecting portion 35 of a first main transverse groove 30 adjacent to the corresponding first main transverse groove 30, opposite to the first main transverse groove 30 intersected by the first portion 62.

Overall, therefore, each secondary transverse groove 60 affects three first main transverse grooves 30, one intersected by the first portion 62, one (the corresponding first main transverse groove) in which the second portion 63 ends and from which the third portion 64 begins, and finally one in which the third portion 64 ends.

The ends 65 of the third portions of the secondary transverse grooves 60 are substantially aligned along the circumferential direction.

Moreover, the end 61 of each secondary transverse groove 60 is substantially aligned along the axial direction Y, or, at most, is axially offset by a maximum amount of 20 mm, with respect to the end 31 of the corresponding first main transverse groove 30.

In a secondary transverse groove 60, the third portion 64 can be substantially aligned with the respective second portion 63, or not.

In particular, a first group of secondary transverse grooves 60, representing a fraction equal to about 8 - 10% of all the secondary transverse grooves 60 provided on the tread band 2, shows a substantial alignment between the second portion 63 and the third portion 64, while a second group, formed by all the remaining secondary transverse grooves 60, shows a misalignment between the second portion 63 and the third portion 64.

In the secondary transverse grooves 60 of the second group, the misalignment value between the second and third portions varies from groove to groove, but it is always less than 25 mm. Moreover, these misalignment values between the second and third portions are at least three, comprised between 3 mm and 25 mm.

The second main transverse grooves 40 extend through the respective pairs of circumferential grooves, which delimit the circumferential ribs 11 and 12.

Each second main transverse groove 40 provided on the circumferential rib 11 is substantially aligned with a corresponding second main transverse groove 40 provided on the circumferential rib 12 and is slanted relative to the circumferential direction by a sixth angle F of about 70°.

The second main transverse grooves 40 have a variable width between about 3.5 mm and about 5 mm with an average value of about 4 - 4.5 mm and a depth of about 7.5 mm.

The third main transverse grooves 50 extend through the external shoulder region 9 and are slanted relative to the circumferential direction by a seventh angle G of about 85°, so as to be substantially parallel to the first portion 33 of the first main transverse grooves 30.

The transverse and circumferential grooves described above delimit a corresponding plurality of blocks of the tread band 2, all identified with 70.

On each block 70, at least one sipe 80 is provided, which can be configured in any suitable manner. In particular, in the present embodiment, the sipes 80 are extended in a straight manner and, inside each block 70, the sipes are substantially parallel and equally spaced from each other.

In the internal and external shoulder regions 7 and 9, the sipes are moreover extended substantially parallel to the direction of the first portion 33 of the first main transverse grooves 30 and of the third main transverse grooves 50, respectively.

In the central region 10, on the other hand, all the sipes 80 are slanted respective to the circumferential direction in a discordant manner relative to the main transverse grooves. In particular, in a central region 10, the sipes 80 are all parallel to the first portion 62 of the secondary transverse grooves 60 and thus are slanted relative to the circumferential direction by an angle equal to about 75°.

The set of blocks and of transverse and circumferential grooves defines the tread pattern of the tyre.

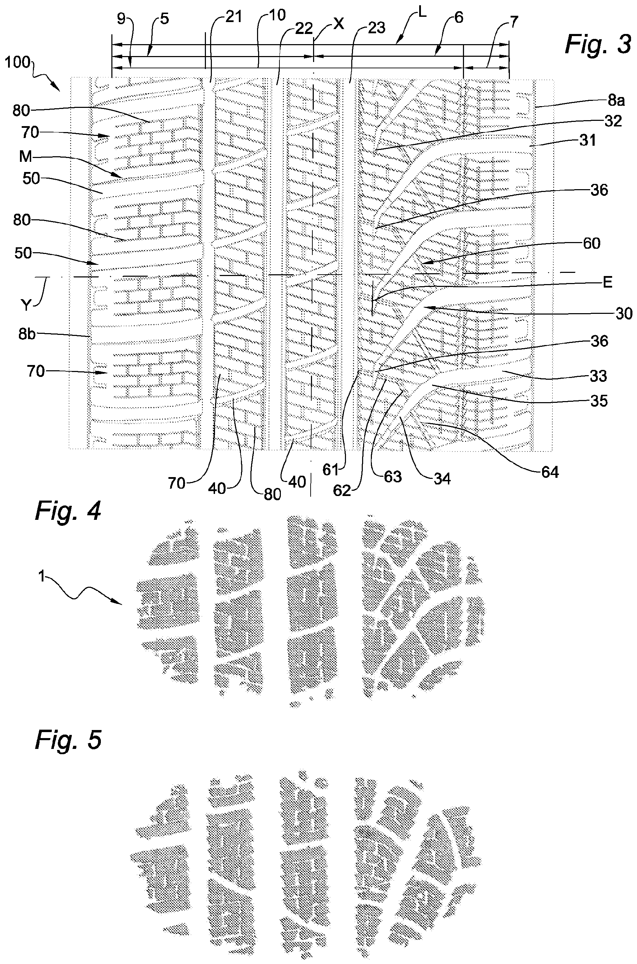

This pattern is formed by the repetition in succession along the circumferential formation of the tread band 2 of a module M, which for reasons of clarity is shown only in figure 3, but which is also easily identifiable even on the tread band of figure 2.

The module M comprises, at the internal and external shoulder regions 7 and 9, a single block extending along the circumferential direction.

In the embodiment described herein, the circumferential dimension of the module M, i.e. its pitch, can assume three values, and modules with different pitches are variously combined along the circumferential extent of the tread band 2.

In figure 3 is illustrated a second embodiment of the tyre, generally indicated with 100, made in accordance with this invention.

The tyre 100 has a width of the nominal section that is less than tyre 1, for example about 245 mm with a diameter of 20 inches.

This feature leads to a general reduction in the widths of the shoulder regions 7 and 9, of the central region 10, as well as of the first circumferential groove 20 (which becomes a secondary circumferential groove) and of the second circumferential groove 21.

Moreover, in each first main transverse groove 30 is defined a third portion 36 extending from the second portion 34 towards the second end 32. This third portion 36 is slanted respective to the circumferential direction by a fifth angle E of about 15°.

In this second embodiment, the first portion 62 of the secondary transverse grooves 60 intersects the first main transverse grooves 30 in correspondence with the third portion 36.

The remaining characteristics of the tyre 100 are completely analogous to those of tyre 1 described in the previous embodiment.

### EXAMPLE

The Applicant has compared a tyre made according to the invention, according to the first preferred embodiment described above referring to figures 1 and 2 ("invention") with a similarly sized tyre made substantially according to patent EP 2095976, in the name of the same Applicant ("comparison").

The Applicant has therefore carried out a series of tests according to recognized international standards on different driving surfaces in order to measure some characteristic parameters.

The test results are summarized in the following table 1, in which the values of the parameters are expressed in percentages by setting the values related to the comparison tyre equal to 100.

**Table 1**

| | Comparison | Invention |
|---|---|---|
| Traction on snowy ground | 100 | 104 |
| Sudden change of direction on dry ground (change lane) | 100 | 105 |
| Behaviour on snowy ground | 100 | 105 |
| Behaviour on wet surfaces | 100 | 104 |

The tests have therefore shown that the tyre in the invention presents a substantial and relevant improvement in traction, in sudden change of direction and in road behaviour, in general on any type of road surface.

This improved road behaviour should be attributed, at least in a large part, to the features which are the subject matter of the present invention and is reflected in the examination of figures 4 and 5 wherein the respective footprint areas of the tyre in the invention and for the comparison tyre are illustrated.

In fact, it is shown in the footprint area of the tyre in the invention that the slant of the main transverse groove is counterbalanced by the opposite slant of the grooves of the sipes and of secondary transverse grooves, less broad but much more numerous.

Moreover, in the footprint area of the tyre in the invention there is a larger number of first main grooves, which, having a more axial orientation, improves the performance during traction.

The Applicant also compared the two tyres in an anechoic chamber, in order to measure their performance in terms of noise. In the test the tyres were mounted on a high-performance car and the noise was measured according to speed with a microphone placed inside the car and two microphones placed outside the same in different positions.

The test results showed that the tyre in the invention presents a substantial noise reduction, at each speed measured both inside and outside the vehicle. In particular, at speeds of 150 km/h, 130 km/h, 100 km/h and 70 km/h, the noise inside the vehicle is reduced by a value ranging from 3 to 5 decibels and outside the vehicle by a value ranging from 2 to 4 decibels.

## Claims

1. Tyre for vehicle wheels, comprising a tread band (2), on which there are defined:
- a pair of axially opposite shoulder regions (7, 9);
- a central region (10) interposed between said shoulder regions and extending symmetrically relative to an equatorial plane (X) for a width between 40% and 75% of the effective width of the tread band, the effective width of the tread band being the width of the radially outermost portion of the tread band, edge to edge, designed to get in contact with the ground,
wherein, in each of said shoulder regions and said central region, are provided:
- a plurality of main transverse grooves (30, 40, 50) slanted relative to a circumferential direction defined on said tread band,
- a plurality of blocks (70) in which a plurality of sipes (80) are formed, **characterised in that**,
in said central region, all said main transverse grooves (30, 40) are slanted relative to a circumferential direction in a concordant manner to one another and all said sipes (80) are slanted in a concordant manner to one another and in a discordant manner with respect to said main transverse grooves wherein two transverse grooves, considered on a Cartesian plane positioned tangentially on the tread band, with the axis of the ordinates parallel to the circumferential direction and the axis of the abscissas parallel to the axis of the tyre, are slanted in a concordant manner when their trend is, for both, increasing or decreasing, and are slanted in discordant manner when their trend is increasing for one groove and decreasing for the other groove, and wherein
a plurality of first main transverse grooves (30) are provided in one of said shoulder regions (7) and in said central region (10), each of which grooves comprises:
- a first portion (33) extending from said shoulder region (7) towards the equatorial plane (X) of said tyre, which first portion is slanted relative to said circumferential direction by a first angle (A) and
a second portion (34) extending into said central region (10) towards said equatorial plane as a continuation of said first portion (33) which second portion is slanted relative to said circumferential direction by a second angle (B), that is smaller than said first angle (A).

2. Tyre according to claim 1, wherein, all said main transverse grooves (50) provided in at least one of said shoulder regions (9) are slanted relative to a circumferential direction in a concordant manner to said main transverse grooves (30, 40) provided in said central region.

3. Tyre according to any one of the preceding claims, wherein, in said central region, all said sipes (80) are parallel to one another.

4. Tyre according to any one of the preceding claims, wherein said first main transverse grooves (30) comprise a first, axially external, end (31), which is open to a lateral edge (8a) of said tread band, as well as a second, axially internal, blind end (32).

5. Tyre according to any one of the preceding claims, wherein a plurality of secondary transverse grooves (60), which are all slanted in a concordant manner to one another and in a discordant manner with respect to said main transverse grooves, are provided in said central region (10).

6. Tyre according to claim 5, wherein each of said secondary transverse grooves (60) comprises:
- a first portion (62) that extends towards one of said shoulder regions and is slanted relative to said circumferential direction by a third angle (C) and
- a second portion (63) that extends from said first portion (62) towards said shoulder region and is slanted relative to said circumferential direction by a fourth angle (D) that is smaller than said third angle (C).

7. Tyre according to any one of the preceding claims, wherein said equatorial plane (X) divides said tread band into an inner region (6), intended to face the vehicle when said tyre is fitted to said vehicle, and an outer region (5), which is different from said inner region and is intended to face the side opposite the vehicle when said tyre is fitted to said vehicle, thus defining an asymmetrical tyre, said first main transverse grooves (30) extending within said inner region (6) of said tread band.

8. Tyre according to any one of claims 6 to 7, wherein said third angle (C) and said first angle (A) differ, in absolute value, by less than 15° and said fourth angle (D) and said second angle (B) differ, in absolute value, by less than 15°.

9. Tyre according to any one of claims 6 to 8, wherein each of said secondary transverse grooves (60) comprises a third portion (64), which extends from said second portion (34), on the side opposite said second portion (63) of said secondary transverse groove (60), and is substantially parallel to said second portion (63) of said secondary transverse grooves (60).

10. Tyre according to claim 9, wherein there are identified:
- a first group of secondary transverse grooves (60), comprising at most 20% of all of said secondary transverse grooves provided in said tread band, wherein, in each secondary transverse groove, said third portion (64) is substantially aligned with said second portion (63), and
- a second group of secondary transverse grooves (60), which is complementary to said first group and comprises at most 95% of all of said secondary transverse grooves provided in said tread band, wherein, in each secondary transverse groove, said third portion (64) is not aligned with said second portion (63).

11. Tyre according to any one of claims 9 to 10, wherein each of said third portions (64) of said secondary transverse grooves comprises a first end (65), from which said third portion (64) extends from said second portion (34) of said first main transverse groove (30), and wherein said first ends (65) of said third portions (64) of said secondary transverse grooves are substantially aligned in said circumferential direction.

12. Tyre according to any one of claims 6 to 11, wherein each of said secondary transverse grooves (60) comprises a first axially internal end (61) from which said first portion (62) of said secondary transverse groove extends towards said shoulder region, and identifies a corresponding first main transverse groove (30) in which said second portion (63) of said secondary transverse groove (60) ends, wherein said first axially internal end (61) of each of said secondary transverse grooves and a first axially external end (31) of said corresponding first transverse groove (30) are substantially aligned in an axial direction of said tyre, or, at most, are offset by an amount of less than 20 mm.

13. Tyre according to any one of the preceding claims, wherein on said tread band are defined:
- a tread pattern defined by the configuration of grooves and blocks provided in said tread band, and
- a module (M) of said tread pattern, which is formed by the smallest tread band portion, the configuration of which is repeated successively along the circumferential extent of the tread band so as to form said tread pattern,
and wherein said module, in said shoulder regions (7, 9), comprises a single block (70) extending in said circumferential direction.

14. Tyre according to any one of the preceding claims, wherein three circumferential grooves (21, 22, 23) that delimit a pair of circumferential ribs (11, 12) are provided on said central region (10), second main transverse grooves (40) being provided in each of said circumferential ribs.

## Patentansprüche

1. Reifen für Fahrzeugräder, umfassend ein Laufflächenband (2), auf dem Folgendes definiert ist:
- ein Paar von axial gegenüberliegenden Schulterbereichen (7, 9);
- einen zentralen Bereich (10), der zwischen den Schulterbereichen angeordnet ist und sich symmetrisch in Bezug auf eine Äquatorialebene (X) über eine Breite zwischen 40 % und 75 % der effektiven Breite des Laufflächenbandes erstreckt, wobei die effektive Breite des Laufflächenbandes die Breite des radial äußersten Abschnitts des Laufflächenbandes von Kante zu Kante ist, der dazu bestimmt ist, in Kontakt mit dem Boden zu kommen,
wobei in jedem der Schulterbereiche und dem mittleren Bereich vorgesehen sind:
- eine Vielzahl von Hauptquerrillen (30, 40, 50), die in Bezug auf eine auf dem Laufflächenband definierte Umfangsrichtung geneigt sind,
- eine Vielzahl von Blöcken (70), in denen eine Vielzahl von Lamellen (80) gebildet sind, **dadurch gekennzeichnet, dass**,
in dem mittleren Bereich alle Hauptquerrillen (30, 40) relativ zu einer Umfangsrichtung in übereinstimmender Weise zueinander geneigt sind und alle Lamellen (80) in übereinstimmender Weise zueinander und in nicht übereinstimmender Weise in Bezug auf die Hauptquerrillen geneigt sind, wobei zwei Querrillen, betrachtet auf einer kartesischen Ebene, die tangential auf dem Laufflächenband positioniert ist, mit der Achse der Ordinaten parallel zur Umfangsrichtung und der Achse der Abszissen parallel zur Achse des Reifens, in übereinstimmender Weise geneigt sind, wenn ihre Tendenz für beide zunehmend oder abnehmend ist, und in nicht übereinstimmender Weise geneigt sind, wenn ihre Tendenz für eine Rille zunehmend und für die andere Rille abnehmend ist, und wobei
eine Vielzahl von ersten Hauptquerrillen (30) in einem der Schulterbereiche (7) und in dem zentralen Bereich (10) vorgesehen sind, wobei jede der Rillen umfasst:
- einen ersten Abschnitt (33), der sich von einer der Schulterbereichen (7) zu einer Äquatorialebene (X) des Reifens erstreckt, wobei der erste Abschnitt (33) sich von einem ersten, extern axialen Ende (31) der ersten Querrille (30) erstreckt und relativ zur Umfangsrichtung in einem ersten Winkel (A) geneigt ist, und
einen zweiten Abschnitt (34), der sich als Fortsetzung des ersten Abschnitts (33) in den mittleren Bereich (10) zur Äquatorialebene (X) erstreckt, wobei der zweite Abschnitt (34) relativ zur Umfangsrichtung in einem zweiten Winkel (B) geneigt ist, der kleiner als der erste Winkel (A) ist,

2. Reifen nach Anspruch 1, wobei alle Hauptquerrillen (50), die in mindestens einem der Schulterbereiche (9) vorgesehen sind, relativ zu einer Umfangsrichtung in übereinstimmender Weise zu den Hauptquerrillen (30, 40), die in dem zentralen Bereich vorgesehen sind, geneigt sind.

3. Reifen nach einem der vorhergehenden Ansprüche, wobei in dem mittleren Bereich alle Lamellen (80) parallel zueinander sind.

4. Reifen nach einem der vorhergehenden Ansprüche, wobei das erste, axial äußere Ende (31) der ersten Querrille (30) zu einem Seitenrand (8a) des Laufflächenbandes (2) offen ist, und wobei die ersten Querrillen (30) ein zweites, axial inneres blindes Ende (32) aufweisen.

5. Reifen nach einem der vorhergehenden Ansprüche, wobei in dem zentralen Bereich (10) eine Vielzahl von sekundären Querrillen (60) vorgesehen ist, die alle in übereinstimmender Weise zueinander und in nicht übereinstimmender Weise in Bezug auf die Hauptquerrillen geneigt sind.

6. Reifen nach Anspruch 5, wobei jede der zweiten Querrillen (60) umfasst:
- einen ersten Abschnitt (62), der sich in Richtung eines der Schulterbereiche erstreckt und relativ zur Umfangsrichtung um einen dritten Winkel (C) geneigt ist, und
- einen zweiten Abschnitt (63), der sich von dem ersten Abschnitt (62) in Richtung des Schulterbereichs erstreckt und relativ zu der Umfangsrichtung um einen vierten Winkel (D) geneigt ist, der kleiner als der dritte Winkel (C) ist.

7. Reifen nach einem der vorhergehenden Ansprüche, wobei die Äquatorialebene (X) das Laufflächenband in eine innere Bereich (6), die dem Fahrzeug zugewandt sein soll, wenn der Reifen am Fahrzeug montiert ist, und eine äußere Bereich (5) teilt, die sich von der inneren Bereich unterscheidet und der Seite gegenüber dem Fahrzeug zugewandt sein soll, wenn der Reifen am Fahrzeug montiert ist, um dadurch einen asymmetrischen Reifen zu definieren, wobei die ersten Hauptquerrillen (30) sich innerhalb der inneren Bereich (6) des Laufflächenbandes erstrecken.

8. Reifen nach einem der Ansprüche 6 bis 7, wobei der dritte Winkel (C) und der erste Winkel (A) sich im Absolutwert um weniger als 15° unterscheiden und der vierte Winkel (D) und der zweite Winkel (B) sich im Absolutwert um weniger als 15° unterscheiden.

9. Reifen nach einem der Ansprüche 6 bis 8, wobei jede der sekundären Querrillen (60) einen dritten Abschnitt (64) aufweist, der sich von dem zweiten Abschnitt (34) aus auf der dem zweiten Abschnitt (63) der sekundären Querrille (60) gegenüberliegenden Seite erstreckt und im wesentlichen parallel zu dem zweiten Abschnitt (63) der sekundären Querrillen (60) ist.

10. Reifen nach Anspruch 9, wobei gekennzeichnet sind:
- eine erste Gruppe von sekundären Querrillen (60), die höchstens 20 % aller sekundären Querrillen umfasst, die in dem Laufflächenband vorgesehen sind, wobei in jeder sekundären Querrille der dritte Abschnitt (64) im Wesentlichen mit dem zweiten Abschnitt (63) ausgerichtet ist, und
- eine zweite Gruppe von sekundären Querrillen (60), die komplementär zu der ersten Gruppe ist und höchstens 95 % aller sekundären Querrillen umfasst, die in dem Laufflächenband vorgesehen sind, wobei in jeder sekundären Querrille der dritte Abschnitt (64) nicht mit dem zweiten Abschnitt (63) ausgerichtet ist.

11. Reifen nach einem der Ansprüche 9 bis 10, wobei jeder der dritten Abschnitte (64) der sekundären Querrillen ein erstes Ende (65) aufweist, von dem aus sich der dritte Abschnitt (64) von dem zweiten Abschnitt (34) der ersten Hauptquerrille (30) aus erstreckt, und wobei die ersten Enden (65) der dritten Abschnitte (64) der sekundären Querrillen im Wesentlichen in der Umfangsrichtung ausgerichtet sind.

12. Reifen nach einem der Ansprüche 6 bis 11, wobei jede der sekundären Querrillen (60) ein erstes axiales inneres Ende (61) aufweist, von dem aus sich der erste Abschnitt (62) der sekundären Querrille in Richtung des Schulterbereichs erstreckt, und eine entsprechende erste Hauptquerrille (30) kennzeichnet, in der der zweite Abschnitt (63) der sekundären Querrille (60) endet, wobei das erste axial innere Ende (61) jeder der sekundären Querrillen und ein erstes axial äußeres Ende (31) der entsprechenden ersten Querrille (30) im Wesentlichen in einer axialen Richtung des Reifens ausgerichtet sind oder höchstens um einen Betrag von weniger als 20 mm versetzt sind.

13. Reifen nach einem der vorhergehenden Ansprüche, wobei auf dem Laufflächenband (2) Folgendes definiert ist:
- ein Laufflächenmuster, das durch die Konfiguration von Rillen und Blöcken gebildet ist, die in dem Laufflächenband (2) vorgesehen sind, und
- ein Modul (M) des Laufflächenmusters, das durch den kleinsten Laufflächenbandabschnitt gebildet ist, dessen Konfiguration entlang der umfänglichen Erstreckung des Laufflächenbandes aufeinanderfolgend wiederholt wird, um das Laufflächenmuster zu bilden,
und wobei das Modul (M) in den Schulterbereichen (7, 9) einen einzigen Block (70) umfasst, der sich in der Umfangsrichtung erstreckt.

14. Reifen nach einem der vorhergehenden Ansprüche, wobei drei umfängliche Rillen (21, 22, 23), die ein Paar von umfänglichen Rippen (11, 12) begrenzen, im mittleren Bereich (10) vorgesehen sind, wobei zwei Hauptquerrillen (40) in jeder der umfänglichen Rippen vorgesehen sind.

## Revendications

1. Pneumatique pour roues de véhicule, comprenant une bande de roulement (2), sur laquelle sont définis :
- une paire de régions d'épaulement axialement opposées (7, 9) ;
- une région centrale (10) interposée entre lesdites régions d'épaulement et s'étendant symétriquement par rapport à un plan équatorial (X) sur une largeur comprise entre 40% et 75% de la largeur effective de la bande de roulement, la largeur effective de la bande de roulement étant la largeur de la partie radialement la plus à l'extérieur de la bande de roulement, bord à bord, conçue pour entrer en contact avec le sol,
dans lequel, dans chacune desdites régions d'épaulement et de ladite région centrale, sont prévus :
- une pluralité de rainures transversales principales (30, 40, 50) inclinées par rapport à une direction circonférentielle définie sur ladite bande de roulement,
- une pluralité de blocs (70) dans lesquels une pluralité de lamelles (80) sont formées, **caractérisé en ce que**,
dans ladite région centrale, toutes lesdites rainures transversales principales (30, 40) sont inclinées par rapport à une direction circonférentielle de manière concordante les unes par rapport aux autres et toutes lesdites lamelles (80) sont inclinées de manière concordante les unes par rapport aux autres et de manière discordante par rapport auxdites rainures transversales principales dans lequel deux rainures transversales, considérées sur un plan cartésien positionné tangentiellement sur la bande de roulement, avec l'axe des ordonnées parallèle à la direction circonférentielle et l'axe des abscisses parallèle à l'axe du pneumatique, sont inclinées de manière concordante lorsque leur tendance est, pour les deux, croissante ou décroissante, et sont inclinées de manière discordante lorsque leur tendance est croissante pour une rainure et décroissante pour l'autre rainure, et dans lequel
une pluralité de premières rainures transversales principales (30) sont prévues dans l'une desdites régions d'épaulement (7) et dans ladite région centrale (10), chacune de ces rainures comprenant :
- une première partie (33) s'étendant depuis ladite région d'épaulement (7) vers le plan équatorial (X) dudit pneumatique, laquelle première partie est inclinée par rapport à ladite direction circonférentielle d'un premier angle (A) et
une seconde partie (34) s'étendant dans ladite région centrale (10) vers ledit plan équatorial (X) en tant que continuation de ladite première partie (33), laquelle seconde partie est inclinée par rapport à ladite direction circonférentielle d'un second angle (B), qui est inférieur audit premier angle (A).

2. Pneumatique selon la revendication 1, dans lequel, toutes lesdites rainures transversales principales (50) prévues dans au moins une desdites régions d'épaulement (9) sont inclinées par rapport à une direction circonférentielle de manière concordante auxdites rainures transversales principales (30, 40) prévues dans ladite région centrale.

3. Pneumatique selon l'une quelconque des revendications précédentes, dans lequel, dans ladite région centrale, toutes lesdites lamelles (80) sont parallèles entre elles.

4. Pneumatique selon l'une quelconque des revendications précédentes, dans lequel lesdites premières rainures transversales principales (30) comprennent une première extrémité (31) axialement externe, qui est ouverte à un bord latéral (8a) de ladite bande de roulement (2), ainsi qu'une seconde extrémité borgne axialement interne (32).

5. Pneumatique selon l'une quelconque des revendications précédentes, dans lequel une pluralité de rainures transversales secondaires (60), qui sont toutes inclinées de manière concordante les unes par rapport aux autres et de manière discordante par rapport auxdites rainures transversales principales, sont prévues dans ladite région centrale (10).

6. Pneumatique selon la revendication 5, dans lequel chacune desdites rainures transversales secondaires (60) comprend :
- une première partie (62) qui s'étend vers l'une desdites régions d'épaulement et est inclinée par rapport à ladite direction circonférentielle d'un troisième angle (C) et
- une deuxième partie (63) qui s'étend depuis ladite première partie (62) vers ladite région d'épaulement et est inclinée par rapport à ladite direction circonférentielle d'un quatrième angle (D) qui est inférieur audit troisième angle (C).

7. Pneumatique selon l'une quelconque des revendications précédentes, dans lequel ledit plan équatorial (X) divise ladite bande de roulement en une région intérieure (6), destinée à faire face au véhicule lorsque ledit pneumatique est monté sur ledit véhicule, et une région extérieure (5), qui est différente de ladite région intérieure et est destinée à être tournée vers le côté opposé au véhicule lorsque ledit pneumatique est monté sur ledit véhicule, définissant ainsi un pneumatique dissymétrique, lesdites premières rainures transversales principales (30) s'étendant à l'intérieur de ladite région intérieure (6) de ladite bande de roulement.

8. Pneumatique selon l'une quelconque des revendications 6 à 7, dans lequel ledit troisième angle (C) et ledit premier angle (A) diffèrent, en valeur absolue, de moins de 15° et ledit quatrième angle (D) et ledit deuxième angle (B) diffèrent, en valeur absolue, de moins de 15°.

9. Pneumatique selon l'une quelconque des revendications 6 à 8, dans lequel chacune desdites rainures transversales secondaires (60) comprend une troisième partie (64), qui s'étend depuis ladite deuxième partie (34), du côté opposé à ladite deuxième partie (63 ) de ladite rainure transversale secondaire (60), et est sensiblement parallèle à ladite deuxième partie (63) desdites rainures transversales secondaires (60).

10. Pneumatique selon la revendication 9, dans lequel sont identifiés :
- un premier groupe de rainures transversales secondaires (60), comprenant au plus 20 % de toutes lesdites rainures transversales secondaires prévues dans ladite bande de roulement, dans lequel, dans chaque rainure transversale secondaire, ladite troisième partie (64) est sensiblement alignée avec ladite seconde partie (63), et
- un deuxième groupe de rainures transversales secondaires (60), qui est complémentaire dudit premier groupe et comprend au plus 95 % de l'ensemble desdites rainures transversales secondaires prévues dans ladite bande de roulement, dans lequel, dans chaque rainure transversale secondaire, ladite troisième partie (64) n'est pas aligné avec ladite deuxième partie (63).

11. Pneumatique selon l'une quelconque des revendications 9 à 10, dans lequel chacune desdites troisièmes parties (64) desdites rainures transversales secondaires comprend une première extrémité (65), à partir de laquelle ladite troisième partie (64) s'étend depuis ladite deuxième partie (34) de ladite première rainure transversale principale (30), et dans lequel lesdites premières extrémités (65) desdites troisièmes parties (64) desdites rainures transversales secondaires sont sensiblement alignées dans ladite direction circonférentielle.

12. Pneumatique selon l'une quelconque des revendications 6 à 11, dans lequel chacune desdites rainures transversales secondaires (60) comprend une première extrémité axialement interne (61) à partir de laquelle ladite première partie (62) de ladite rainure transversale secondaire s'étend vers ladite région d'épaulement, et identifie une première rainure transversale principale correspondante (30) dans laquelle se termine ladite deuxième partie (63) de ladite rainure transversale secondaire (60), dans lequel ladite première extrémité axialement interne (61) de chacune desdites rainures transversales secondaires et une première extrémité externe (31) de ladite première rainure transversale correspondante (30) sont sensiblement alignées dans une direction axiale dudit pneumatique, ou, au plus, sont décalées d'une valeur inférieure à 20 mm.

13. Pneumatique selon l'une quelconque des revendications précédentes, dans lequel sur ladite bande de roulement sont définis :
- un motif de bande de roulement défini par la configuration des rainures et des blocs prévus dans ladite bande de roulement, et
- un module (M) dudit motif de bande de roulement, qui est formé par la plus petite partie de bande de roulement, dont la configuration est répétée successivement le long de l'étendue circonférentielle de la bande de roulement de manière à former ledit motif de bande de roulement,
et dans lequel ledit module (M), dans lesdites régions d'épaulement (7, 9), comprend un seul bloc (70) s'étendant dans ladite direction circonférentielle.

14. Pneumatique selon l'une quelconque des revendications précédentes, dans lequel trois rainures circonférentielles (21, 22, 23) délimitant une paire de nervures circonférentielles (11, 12) sont prévues sur ladite région centrale (10), des deuxièmes rainures transversales principales (40) étant prévues dans chacune desdites nervures circonférentielles.
